# EUROPÄISCHE PATENTSCHRIFT

(11) **EP 3 137 351 B1**
(45) Veröffentlichungstag und Bekanntmachung des Hinweises auf die Patenterteilung: **14.10.2020**
(21) Anmeldenummer: 15722035.1
(22) Anmeldetag: 31.03.2015
(51) Int. Cl.: B60T 7/04, B60T 8/40, B60T 13/66

(54) **VORRICHTUNG ZUR KRAFTSIMULATION AN EINEM BETÄTIGUNGSELEMENT EINES FAHRZEUGES, VORZUGSWEISE EIN PEDALSIMULATOR, UND EINRICHTUNG ZUR BETÄTIGUNG EINES ELEKTRISCHEN KUPPLUNGSSYSTEMS**
DEVICE FOR FORCE SIMULATION AT A SERVICE ELEMENT, PREFERABLY A PEDAL SIMULATOR, AND ARRANGEMENT TO ACTIVATE AN ELECTRIC CLUTCH SYSTEM
DISPOSITIF DE SIMULATION DE FORCE POUR UN ÉLÉMENT DE SERVICE, DE PRÉFÉRENCE UN SIMULATEUR DE PEDAL, ET ARRANGEMENT POUR ACTIVER UN SYSTÈME D'EMBRAYAGE ÉLECTRIQUE

(30) Priorität: 29.04.2014 DE 102014207980
(43) Veröffentlichungstag der Anmeldung: 08.03.2017
(73) Patentinhaber: Schaeffler Technologies AG & Co. KG, 91074 Herzogenaurach (DE)
(72) Erfinder: FIORINI, Francesco, Emanuele, 32758 Detmold (DE); HONSELMANN, Sebastian, 77886 Lauf (DE); BASSLER, Manuel, 77855 Achern (DE)
(86) Internationale Anmeldenummer: PCT/DE2015/200217
(87) Internationale Veröffentlichungsnummer: WO 2015/165452

(56) Entgegenhaltungen:
- DE-A1- 3 830 836
- DE-A1-102011 016 240
- US-A1- 2014 069 093

## Beschreibung

Die Erfindung betrifft eine Vorrichtung zur Kraftsimulation an einem Betätigungselement eines Fahrzeuges, vorzugsweise einen Pedalsimulator, welcher eine haptische Rückmeldung über ein vorgegebenes Kraft-Weg-Verhalten vermittelt, umfassend eine Kolben-Zylinder-Einheit, wobei ein Arbeitskolben über eine Kolbenstange mit dem Betätigungselement verbunden ist, welches den Arbeitskolben innerhalb des Zylinders axial bewegt sowie eine Einrichtung zur Betätigung eines elektrischen Kupplungssystems mit einer solchen Vorrichtung.

Die DE 10 2011 016 240 A1 und die DE 10 2011 016 239 A1 zeigen zum Beispiel solche Vorrichtungen.

Aus der DE 10 2011 016 239 A1 ist ein Pedalkraftsimulator für eine Fahrzeugbremsanlage mit elektronischer Signalübertragung bekannt, bei der eine, von der Fußkraft des Fahrzeugführers abhängige Aussteuerung des Bremsmomentes, insbesondere mittels elektro-hydraulischer oder elektro-mechanischer Systeme vorgenommen wird, wobei der Pedalkraftsimulator ein für einen Fahrzeugführer gewohntes Bremsgefühl generiert. Der Pedalkraftsimulator umfasst eine pneumatisch arbeitende Kolben-Zylinder-Einheit, deren Kolben eine Kompressionskammer mit einem ansteuerbaren Ventil begrenzt und entgegen der Kompressionsrichtung mittels zumindest eines ersten Federelementes den Kolben mit einer Kraft belastet sowie über eine Kolbenstange mit einem Fahrzeugbremspedal derart wirkverbunden ist, dass die Kolbenstange während der Betätigung des Fahrzeugbremspedals eine Winkeländerung relativ zur Kolben-Zylinder-Einheit erfährt. Diese Winkelbeweglichkeit stellt hohe Anforderungen an die Konstruktion des Pedalkraftsimulators.

Die DE 10 2010 061 439 A1 offenbart ein Bremssystem für ein Kraftfahrzeug, bei welchem ein Bremspedal, das von einem Fahrzeugführer betätigbar ist, mit einem Pedalsimulator zur Erzeugung einer wegabhängigen Gegen- bzw. Rückstellkraft verbunden ist. Die Stellung des Bremspedals wird mittels eines Sensors erfasst und dessen Sensorsignal dem Steuergerät zur Auswertung zugeführt. Entsprechend der Stellung des Bremspedals erzeugt das Steuergerät Steuersignale für eine Antriebssteuereinheit und eine Bremssteuereinrichtung, so dass ein dadurch erzeugter generatorischer Bremsanteil zusammen mit dem Reibungsbremsanteil ein Bremsmoment bzw. eine Bremswirkung erzeugt, die der Stellung des Bremspedals entspricht. Gleichzeitig wird der Pedalsimulator von dem Steuergerät derart angesteuert, dass auf das Bremspedal eine Gegenkraft bzw. Rückstellkraft wirkt, sich also eine Weg-Kraft-Abhängigkeit einstellt, die dem Fahrer ein Pedalgefühl wie bei einer Bremsung ausschließlich mit einer hydraulischen Bremsanlage gibt.

Der Erfindung liegt die Aufgabe zugrunde, eine Vorrichtung zur Kraftsimulation an einem Betätigungselement eines Fahrzeuges anzugeben, welche dem Fahrzeugführer das gleiche Gefühl übermittelt wie bei einer normalen hydraulischen Anlage und trotzdem einfach herstellbar ist.

Erfindungsgemäß wird die Aufgabe dadurch gelöst, dass in den Zylinder ein annähernd kreisförmiges Widerstandselement radial hineinragt, welches den Zylinder in zwei Hohlräume unterteilt, die beide mit einem Medium gefüllt sind und ein stirnseitig an dem Arbeitskolben befestigter Sekundärkolben bei der Bewegung des Betätigungselementes in eine von dem Widerstandselement aufgespannte Öffnung eingreift, wobei das Medium mit variierenden Volumen vom zwischen dem Sekundärkolben und dem Widerstandselement gebildeten Kreisring durch den Arbeitskolben von dem ersten Hohlraum in den zweiten Hohlraum gedrückt wird. Dies hat den Vorteil, dass auch bei einem nicht hydraulischen Betätigungssystem, insbesondere einem rein elektrischen Fahrzeugkupplungssystem, dem Fahrzeugnutzer das gleiche Gefühl übermittelt wird, wie bei einem normalen hydraulischen Betätigungssystem. Die Vorrichtung zur Kraftsimulation simuliert dabei eine Kraft-Weg-Kennlinie, wobei die Kraft, welche am Fuß oder an der Hand des Fahrzeugnutzers über das Betätigungselement angreift, in Abhängigkeit des durch den Arbeitskolben zurückgelegten Weges hervorgerufen wird. Die Größe der Vorrichtung zur Kraftsimulation entspricht dabei der Größe eines Geberzylinders bei einem hydraulischen Kupplungsbetätigungssystem, so dass keine weiteren Anforderungen an den Platzbedarf im Kraftfahrzeug gestellt werden, weshalb der Kraftsimulator anstelle des Geberzylinders an derselben Stelle im Kraftfahrzeug eingebaut werden kann. Unter einem Widerstandselement soll im Weiteren ein, in das Medium hineinragendes vorsprungähnliches Element verstanden werden, welches dem Medium einen mechanischen Widerstand entgegensetzt.

Vorteilhafterweise weist der Sekundärkolben einen geringeren Durchmesser als der Arbeitskolben auf und verjüngt sich in Richtung des Widerstandselementes. Durch diesen sich verjüngenden Durchmesser des Sekundärkolbens und dem zwischen Widerstandselement und Sekundärkolben hindurch strömenden Medium wird ein Kraftunterschied erzeugt, welcher am Betätigungselement haptisch durch den Fahrzeugnutzer spürbar ist.

In einer Ausgestaltung ist der Sekundärkolben an seiner Oberfläche in seiner Längserstreckung sinusähnlich gestaltet. Durch diese Kolbenkontur sind die Kraftunterschiede verfeinert variierbar, da sich das Volumen des Mediums, welches durch einen, sich zwischen dem Widerstandselement und dem, in die Öffnung des Widerstandselements eingreifenden Sekundärkolben gebildeten Kreisring mit variierender Breite stetig verändert, so dass je nach eingestellter Breite des Kreisringes ein entsprechendes Volumen des Mediums das Widerstandselement passieren kann. Diese Ausgestaltung gewährleistet eine sehr feinfühlige Einstellung der Kraft-Weg-Kennlinie.

In einer Variante weist die Öffnung des Widerstandselementes einen konstanten Querschnitt auf. Dabei lässt der zwischen dem Widerstandselement und dem in die Öffnung des Widerstandselements eingreifenden Sekundärkolben die Kraft allein durch die Oberflächenform des Sekundärkolbens zuverlässig variieren.

In einer weiteren Ausführungsform ist das Medium inkompressibel. Vorteilhafterweise ist das inkompressible Medium eine Hydraulikflüssigkeit, die durch den Arbeitskolben zwischen den von Widerstandselement und Sekundärkolben aufgespannten Kreisring hindurch gedrückt wird. Aufgrund der inkompressiblen Eigenschaft der Hydraulikflüssigkeit entsteht eine Gegenkraft, welche durch den Fahrzeugnutzer am Betätigungselement, vorzugsweise einem Fahrpedal, sicher fühlbar ist.

Um der inkompressiblen Eigenschaft des Mediums Rechnung zu tragen, ist an einer dem Arbeitskolben gegenüberliegenden Seite des Zylinders ein Trennkolben im zweiten Hohlraum positioniert, welcher über ein Federelement an einer Innenwandung des Zylinders angreift. Dadurch wird sichergestellt, dass bei einem Angreifen des inkompressiblen Mediums der Trennkolben in seiner Position nachgibt und so der Raum für das im ersten Hohlraum verdrängte Volumen des Mediums geschaffen wird. Strömt dieses Medium wieder zurück in den ersten Hohlraum, so drückt das Federelement den Trennkolben wieder in seine Ausgangsposition.

In einer weiteren Ausgestaltung sind der erste und der zweite Hohlraum über ein außerhalb des Zylinders angeordnetes Druckventil miteinander verbunden, wobei das Druckventil öffnet, wenn das Medium vom zweiten in den ersten Hohlraum strömt und schließt, wenn das Medium von dem ersten in den zweiten Hohlraum fließt. Mittels dieses Druckventils wird sichergestellt, dass bei Betätigung des Betätigungselementes durch den Fahrzeugnutzer das Medium lediglich durch den Kreisring vom ersten in den zweiten Hohlraum strömt, der von dem Widerstandselement und dem Sekundärkolben entsprechend der Position des Betätigungselementes aufgespannt wird. Dadurch wird das entsprechende haptische Empfinden des Fahrzeugnutzers gesteuert.

In einer anderen Variante sind die Kolbenstange und der Zylinder, zumindest teilweise, mit einer Rückstellfeder verbunden, so dass bei Nachlassen der Betätigung des Betätigungselementes durch den Fahrzeugnutzer das Betätigungselement wieder in seine ursprüngliche Stellung zurückkehren kann.

Eine Weiterbildung der Erfindung betrifft eine Einrichtung zur Betätigung eines elektrischen Kupplungssystems, bei welchem ein Betätigungselement mit einer Vorrichtung zur Kraftsimulation an dem Betätigungselement verbunden ist, wobei die Stellung des Betätigungselementes von einem Sensorelement erfasst und elektrisch an eine Steuereinheit weitergegeben wird, welche mit einer Kupplung in einer Wirkverbindung steht. Die Vorrichtung zur Kraftsimulation ist dabei nach mindestens einem der in dieser Schutzrechtsanmeldung ausgeführten Merkmale ausgebildet. Dies hat den Vorteil, dass bei einem elektrischen Kupplungssystem an dem Betätigungselement von dem Fahrzeugnutzer genau dieselbe Kraft wahrgenommen wird, wie bei einem hydraulischen oder pneumatischen Kupplungssystem.

Vorteilhafterweise weist die Steuereinheit eine als Aktor ausgebildete Leistungseinheit zur Ansteuerung der Kupplung auf, welche mit der Kupplung mechanisch oder hydraulisch oder pneumatisch gekoppelt ist. Somit ist die Vorrichtung zur Kraftsimulation an einem Betätigungselement eines Fahrzeuges in einer beliebigen Form der Betätigungselemente einsetzbar.

Die Erfindung lässt zahlreiche Ausführungsformen zu. Eine davon soll anhand der in der Zeichnung dargestellten Figuren näher erläutert werden.

Es zeigen:
- Figur 1:: eine Prinzipdarstellung eines elektro-hydraulischen Kupplungsbetätigungssystems,
- Figur 2:: ein Ausführungsbeispiel für einen Pedalsimulator des elektro-hydraulischen Kupplungsbetätigungssystems gemäß Figur 1.

Gleiche Merkmale sind mit gleichen Bezugszeichen gekennzeichnet.

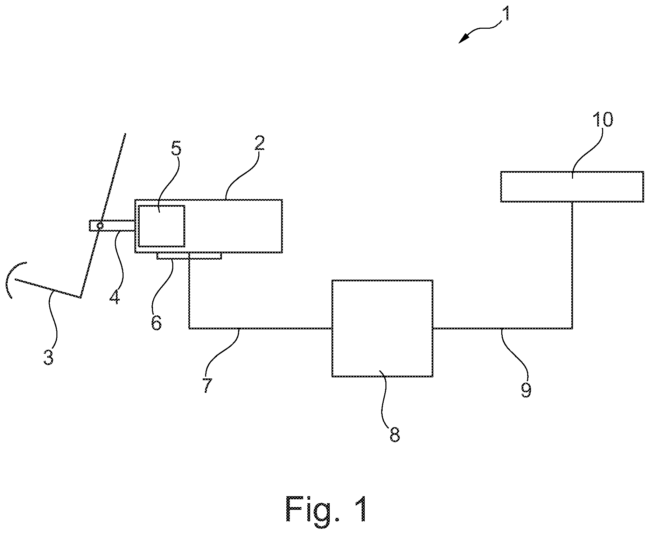

In Figur 1 ist eine Prinzipdarstellung eines elektro-hydraulischen Kupplungsbetätigungssystems dargestellt, welches auch als Clutch-by-Wire- System bezeichnet wird. Das elektrohydraulische Kupplungsbetätigungssystem 1 umfasst einen Pedalsimulator 2, der mechanisch mit einem Kupplungspedal 3 verbunden ist. Das Kupplungspedal 3 betätigt über eine Kolbenstange 4 einen, in dem Pedalsimulator 2 axial beweglich gelagerten Arbeitskolben 5. Die Bewegung des Arbeitskolbens 5 wird durch eine Wegsensoreinheit 6 detektiert, die mit dem Pedalsimulator 2 verbunden und vorzugsweise in diesem integriert ist. Über eine elektrische Leitung 7 ist die Wegsensoreinheit 6 mit einer Steuer- und Leistungseinheit 8 verbunden. Neben der Steuerelektronik umfasst die Steuer- und Leistungseinheit 8 einen Aktor, welcher über eine weitere Leitung 9 die Kupplung 10 ansteuert. Die Leitung 9 ist im vorliegenden Fall als hydraulische Leitung ausgebildet. Die Ansteuerung der Kupplung 10 kann alternativ aber auch pneumatisch oder mechanisch erfolgen.

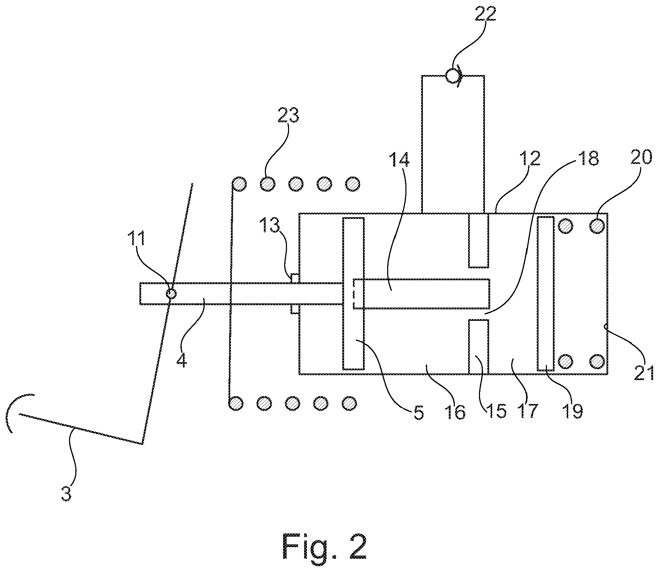

In Figur 2 ist ein Ausführungsbeispiel des Pedalsimulators 2 gezeigt, wie dieser in dem Kupplungsbetätigungssystem 1 gemäß Figur 1 verwendet wird. Das Kupplungspedal 3 ist über einen Anschluss 11 an der Kupplungsstange 4 befestigt. Innerhalb eines Zylinders 12 wird der Arbeitskolben 5 über die Kupplungsstange 4 in Abhängigkeit von der Stellung des Kupplungspedals 3 axial bewegt. Der Zylinder 12 weist an einem Ende ein Führungselement 13, beispielsweise eine Dichtung oder eine Wandöffnung, auf, in welcher die Kolbenstange 4 axial gelagert ist. Am Vorderende der Kolbenstange 4 ist der Arbeitskolben 5 mit dieser verbunden und an der Zylinderinnenwand umfangsseitig geführt.

An der Stirnseite des Arbeitskolbens 5 ist ein Sekundärkolben 14 befestigt, welcher sich in Richtung eines Widerstandselementes 15, das den Innenraum des Zylinders 12 in zwei Hohlräume 16, 17 unterteilt, verjüngt. Gleichzeitig ist die Oberflächenkontur des Sekundärkolbens 14 in seiner Längserstreckung sinusähnlich gestaltet. Der Arbeitskolben 5 bewegt sich dabei im ersten Hohlraum 16 des Zylinders 12.

Das Widerstandselement 15, welches kreisringförmig, beispielsweise als Blende oder Drossel, aufgebaut ist und an der Innenseite des Zylinders 12 befestigt ist, weist eine Öffnung 18 mit einem konstanten Durchmesser auf, in welche bei der Bewegung des Kupplungspedals 3 der Sekundärkolben 14 eindringt. Auf der zum Arbeitskolben 5 entgegengesetzten Seite des Zylinders 12 ist ein Trennkolben 19 im zweiten Hohlraum 17 angeordnet, welcher ebenfalls gleitend axial beweglich gelagert ist und über eine Innenfeder 20 an einer Innenwand 22 des Zylinders 12 anliegt.

Die Hohlräume 16 und 17 sind mit einer hydraulischen Flüssigkeit gefüllt. Ein Druckventil 22, welches das Widerstandselement 15 umgeht und außerhalb des Zylinders 12 abgeordnet ist, verbindet die Hohlräume 16, 17 miteinander, wobei das Druckventil 22 so angeordnet ist, dass es geschlossen ist, wenn die hydraulische Flüssigkeit von dem ersten Hohlraum 16 durch den Arbeitskolben 5 in den zweiten Hohlraum 17 gedrückt wird. Dieses Druckventil 22 ist geöffnet, wenn die hydraulische Flüssigkeit aus dem zweiten Hohlraum 16 in den ersten Hohlraum 15 zurückfließt. Um die Kolbenstange 4 und den Zylinder 12 ist teilweise eine Rückstellfeder 23 angeordnet.

Der beschriebene Pedalsimulator 2 funktioniert wie folgt: Bei der Betätigung des Kupplungspedals 3 wird die Pedalbewegung über den Anschluss 11 in eine entsprechende Vorschubbewegung der Kolbenstange 4 umgesetzt. Hierbei wird zum einen die Rückstellfeder 23 zusammengedrückt und gespannt, wodurch eine rückstellende Reaktionskraft entsteht. Außerdem wird der an der Kolbenstange 4 befestigte Arbeitskolben 5 gemeinsam mit dem Sekundärkolben 14 gegenüber dem ortsfest gelagerten Zylinder 12 innerhalb diesem vorwärtsbewegt. Dabei greift der Sekundärkolben 14 in die Öffnung 18 des Widerstandselementes 15 ein, wodurch sich zwischen dem Widerstandselement 15 und der Außenkontur des Sekundärkolbens 14 ein Kreisring ausbildet, welcher je nach Position des Sekundärkolbens 14 in seiner Breite variiert. Dadurch wird ein mehr oder weniger großes Volumen der hydraulischen Flüssigkeit entlang der Außenkontur des Sekundärkolbens 14 aus dem ersten Hohlraum 16 durch die Öffnung 18 in den zweiten Hohlraum 17 verdrängt. Zugleich verursacht das über den Arbeitskolben 5 verdrängte Flüssigkeitsvolumen eine Bewegung des Trennkolbens 19, welcher gegen die innenliegende Feder 20 gedrückt wird und dabei das in dem ersten Hohlraum 16 verdrängte Volumen für die hydraulische Flüssigkeit in dem zweiten Hohlraum 17 bereitstellt.

Der beschriebene Pedalsimulator 2 ist für ein nicht hydraulisches Betätigungssystem, insbesondere ein rein elektrisches Fahrzeugkupplungssystem vorgesehen. Er kann alternativ aber auch für beliebige andere Betätigungssysteme wie beispielsweise Bremssysteme, eingesetzt werden, die auch statt eines Pedals ein beliebig anderes Betätigungselement aufweisen können.

### Bezugszeichenliste

- 1: Kupplungsbetätigungssystem
- 2: Pedalsimulator
- 3: Kupplungspedal
- 4: Kolbenstange
- 5: Arbeitskolben
- 6: Wegsensoreinheit
- 7: Elektrische Leitung
- 8: Steuer- und Leistungseinheit
- 9: Hydraulische Leitung
- 10: Kupplung
- 11: Anschluss
- 12: Zylinder
- 13: Führungselement
- 14: Sekundärkolben
- 15: Widerstandselement
- 16: Hohlraum
- 17: Hohlraum
- 18: Öffnung
- 19: Trennkolben
- 20: Innenfeder
- 21: Innenwand
- 22: Druckventil
- 23: Rückstellfeder

## Patentansprüche

1. Vorrichtung zur Kraftsimulation an einem Betätigungselement eines Fahrzeuges, vorzugsweise ein Pedalsimulator, welcher eine haptische Rückmeldung über ein vorgegebenes Kraft-Weg-Verhalten vermittelt, umfassend eine Kolben-Zylinder-Einheit (5, 12), wobei ein Arbeitskolben (5) über eine Kolbenstange (4) mit dem Betätigungselement (3) verbunden ist, welches den Arbeitskolben (5) innerhalb des Zylinders (12) axial bewegt, **dadurch gekennzeichnet, dass** in den Zylinder (12) ein annähernd kreisring-förmiges Widerstandselement (15) radial hineinragt, welches den Zylinder (12) in zwei Hohlräume (16, 17) unterteilt, welche beide mit einem Medium gefüllt sind und ein stirnseitig an dem Arbeitskolben (5) angeordneter Sekundärkolben (14) i bei der Bewegung des Betätigungselementes (3) in eine, von dem Widerstandselement (15) aufgespannte Öffnung (18) eingreift, wobei das Medium mit variierendem Volumen vom zwischen dem Sekundärkolben (14) und dem Widerstandselement (15) gebildeten Kreisring durch den Arbeitskolben (5) von dem ersten Hohlraum (16) in den zweiten Hohlraum (17) gedrückt wird.

2. Vorrichtung nach Anspruch 1, **dadurch gekennzeichnet, dass** der Sekundärkolben (14) einen geringeren Durchmesser als der Arbeitskolben (5) aufweist und sich in Richtung des Widerstandselementes (15) verjüngt.

3. Vorrichtung nach Anspruch 1 oder 2, **dadurch gekennzeichnet, dass** der Sekundärkolben (14) an seiner Oberfläche in seiner Längserstreckung sinusähnlich gestaltet ist.

4. Vorrichtung nach Anspruch 1, 2 oder 3, **dadurch gekennzeichnet, dass** die Öffnung (18) des Widerstandselementes (15) einen konstanten Durchmesser aufweist.

5. Vorrichtung nach mindestens einem der vorhergehenden Ansprüche, **dadurch gekennzeichnet, dass** das Medium inkompressibel ist.

6. Vorrichtung nach Anspruch 5, **dadurch gekennzeichnet, dass** an einer, dem Arbeitskolben (5) gegenüber liegenden Seite des Zylinders (12) ein Trennkolben (19) im zweiten Hohlraum (17) positioniert ist, welcher über ein Federelement (20) an einer Innenwandung (21) des Zylinders (12) angreift.

7. Vorrichtung nach mindestens einem der vorhergehenden Ansprüche, **dadurch gekennzeichnet, dass** der erste und der zweite Hohlraum (16, 17) über ein außerhalb des Zylinders (12) angeordnetes Druckventil (22) miteinander verbunden sind, wobei das Druckventil (22) öffnet, wenn das Medium vom zweiten (17) in den ersten Hohlraum (16) strömt und schließt, wenn das Medium von dem ersten (16) in den zweiten Hohlraum (17) fließt.

8. Vorrichtung nach mindestens einem der vorhergehenden Ansprüche, **dadurch gekennzeichnet, dass** die Kolbenstange (4) und der Zylinder (12), zumindest teilweise, mit einer Rückstellfeder (23) verbunden sind.

9. Einrichtung zur Betätigung eines elektrischen Kupplungssystems, bei welchem ein Betätigungselement (3) mit einer Vorrichtung zur Kraftsimulation (2) an dem Betätigungselement (3) verbunden ist, wobei die Stellung des Betätigungselementes (3) von einer Sensoreinheit (6) erfasst und elektrisch an eine Steuereinheit (8) weitergegeben wird, welche mit einer Kupplung (10) in einer Wirkverbindung steht, **dadurch gekennzeichnet, dass** die Vorrichtung zur Kraftsimulation (2) nach mindestens einem der vorhergehenden Ansprüche 1 bis 8 ausgebildet ist.

10. Einrichtung nach Anspruch 9, **dadurch gekennzeichnet, dass** die Steuereinheit (8) eine als Aktor ausgebildete Leistungseinheit zur Ansteuerung der Kupplung (10) aufweist, welche mit der Kupplung (10) mechanisch oder hydraulisch oder pneumatisch gekoppelt ist.

## Claims

1. A device for force simulation on an actuating element of a vehicle, preferably a pedal simulator, which provides haptic feedback about a predefined force-displacement behaviour, comprising a piston-cylinder unit (5, 12), a working piston (5) being connected via a piston rod (4) to the actuating element (3) which axially moves the working piston (5) within the cylinder (12), **characterised in that** an approximately circular-shaped resistance element (15) projects radially into the cylinder (12) which divides the cylinder (12) into two cavities (16, 17), both of which are filled with a medium and a secondary piston (14) located on the end of the working piston (5) when the actuating element (3) moves into and engages one of the openings (18) spanning the resistance element (15), the medium is pressed from the first cavity (16) into the second cavity (17) with a varying volume of the circular ring formed between the secondary piston (14) and the resistance element (15) through the working piston (5).

2. The device according to claim 1, **characterised in that** the secondary piston (14) has a smaller diameter than the working piston (5) and tapers in the direction of the resistance element (15).

3. The device according to claim 1 or 2, **characterised in that** the surface of the secondary piston (14) is sinusoidal in its longitudinal extent.

4. The device according to claim 1, 2 or 3, **characterised in that** the opening (18) of the resistance element (15) has a constant diameter.

5. The device according to at least one of the preceding claims, **characterised in that** the medium is incompressible.

6. The device according to claim 5, **characterised in that** a separating piston (19) is positioned in the second cavity (17) on a side of the cylinder (12) opposite the working piston (5) and engages with an inner wall (21) via a spring element (20) of the cylinder (12).

7. The device according to at least one of the preceding claims, **characterised in that** the first and the second cavity (16, 17) are connected to one another via a pressure valve (22) arranged outside the cylinder (12), the pressure valve (22) opening when the medium flows from the second (17) into the first cavity (16) and closing when the medium flows from the first (16) into the second cavity (17).

8. The device according to at least one of the preceding claims, **characterised in that** the piston rod (4) and the cylinder (12) are, at least partially, connected to a return spring (23).

9. An arrangement to actuate an electrical clutch system in which an actuating element (3) is connected to a device for force simulation (2) on the actuating element (3), the position of the actuating element (3) being detected by a sensor unit (6) and being electrically relayed to a control unit (8), which is in operative connection with a clutch (10), **characterised in that** the device for force simulation (2) is designed according to at least one of the preceding claims 1 to 8.

10. The arrangement according to claim 9, **characterised in that** the control unit (8) has a power unit designed as an actuator for controlling the clutch (10) which is mechanically or hydraulically or pneumatically coupled to the clutch (10).

## Revendications

1. Dispositif de simulation de force pour un élément de service d'un véhicule, de préférence un simulateur de pédale, lequel fournit un message de retour haptique sur un comportement force-déplacement prédéterminé, comprenant une unité de piston-cylindre (5, 12), un piston de travail (5) étant raccordé à l'aide d'une tige de piston (4) à l'élément de service (3), lequel déplace axialement le piston de travail (5) à l'intérieur du cylindre (12), **caractérisé en ce que**, dans le cylindre (12), un élément de résistance (15), approximativement annulaire fait saillie radialement, divisant le cylindre (12) en deux cavités (16, 17), lesquelles sont toutes les deux remplies d'un milieu, et un piston secondaire (14) disposé frontalement sur le piston de travail (5) venant en prise avec une ouverture (18) tendue par l'élément de résistance (15) lorsque l'élément de service (3) se déplace, le milieu à volume variable formé par l'anneau entre le piston secondaire (14) et l'élément de résistance (15) étant poussé au moyen du piston de travail (5) de la première cavité (16) vers la seconde cavité (17).

2. Dispositif selon la revendication 1, **caractérisé en ce que** le piston secondaire (14) présente un diamètre inférieur au diamètre du piston de travail (5) et se rétrécit dans la direction de l'élément de résistance (15).

3. Dispositif selon la revendication 1 ou 2, **caractérisé en ce que** le piston secondaire (14) est conçu de manière sinusoïdale au niveau de sa surface, dans son extension longitudinale.

4. Dispositif selon la revendication 1, 2 ou 3, **caractérisé en ce que** l'ouverture (18) de l'élément de résistance (15) présente un diamètre constant.

5. Dispositif selon au moins l'une quelconque des revendications précédentes, **caractérisé en ce que** le milieu est incompressible.

6. Dispositif selon la revendication 5, **caractérisé en ce que**, sur un côté du cylindre (12) opposé au piston de travail (5), un piston de séparation (19) est positionné dans la seconde cavité (17), lequel vient en prise, au moyen d'un élément de ressort (20), avec une paroi intérieure (21) du cylindre (12).

7. Dispositif selon au moins l'une quelconque des revendications précédentes, **caractérisé en ce que** la première et la seconde cavité (16, 17) sont raccordées l'une à l'autre au moyen d'une soupape de pression (22) disposée à l'extérieur du cylindre (12), la soupape de pression (22) s'ouvrant lorsque le milieu s'écoule de la seconde cavité (17) vers la première cavité (16) et se fermant lorsque le milieu s'écoule de la première cavité (16) vers la seconde cavité (17).

8. Dispositif selon au moins l'une quelconque des revendications précédentes, **caractérisé en ce que** la tige de piston (4) et le cylindre (12) sont, au moins partiellement, raccordés à un ressort de rappel (23).

9. Arrangement pour activer un système d'embrayage électrique, dans lequel un élément de service (3) est raccordé à un dispositif de simulation de force (2) sur l'élément de service (3), la position de l'élément de service (3) étant détectée par une unité de capteur (6) et transmise électriquement à une unité de commande (8), laquelle est en liaison fonctionnelle avec un embrayage (10), **caractérisé en ce que** le dispositif de simulation de force (2) est conçu selon au moins l'une quelconque des revendications 1 à 8 précédentes.

10. Arrangement selon la revendication 9, **caractérisé en ce que** l'unité de commande (8) présente une unité de puissance conçue sous la forme d'un actionneur pour commander l'embrayage (10), laquelle est couplée mécaniquement, hydrauliquement ou pneumatiquement à l'embrayage (10).
